# FASCICULE DE BREVET EUROPEEN

(11) **EP 2 363 261 B1**
(45) Date de publication et mention de la délivrance du brevet: **28.11.2012**
(21) Numéro de dépôt: 11350001.1
(22) Date de dépôt: 21.02.2011
(51) Int. Cl.: B28B 7/10, B60P 1/28, B65D 88/60, B60P 1/00

(54) **Benne à rebuts de béton équipée d'un outil d'aide au déchargement.**
Fördergefäß für Betonabfälle, das mit einem Hilfsentladewerkzeug ausgestattet ist
Concrete waste skip equipped with a tool to aid in unloading it

(30) Priorité: 02.03.2010 FR 1000849
(43) Date de publication de la demande: 07.09.2011
(73) Titulaire: Lebrequier, Daniel, 35890 Laille (FR)
(72) Inventeur: Lebrequier, Daniel, 35890 Laille (FR)
(74) Mandataire: Tournel, Jean Louis

(56) Documents cités:
- FR-A1- 2 929 604
- US-A1- 2005 220 589
- US-B1- 6 206 476

## Description

L'invention se rapporte à une benne à rebut de béton équipée d'un outil d'aide au déchargement.

Il n'est pas rare que les camions de livraison de béton prêt à l'utilisation reviennent avec une partie de leur chargement. Ce béton ne pouvant être mélangé avec un béton frais, il est stocké dans des bennes à rebuts.

Une benne à rebut comprend un fond, une paroi avant, deux parois latérales et un ouvrant à l'arrière, les parois latérales s'écartant vers le haut pour définir une section en trapèze, la petite base correspondant au fond de la benne.

En outre, la section trapézoïdale de ces bennes augmente de l'avant vers l'arrière.

Ainsi lorsque l'on doit vider la benne du bloc de béton solidifié, au fur et à mesure du déplacement, le bloc ne repose plus que sur le fond ce qui réduit les frottements.

Pour la manoeuvre de ces bennes, il est prévu au niveau de la paroi avant un anneau pour un bras de levage équipant un camion porteur tel que décrit dans les documents US2005/220589 et US6206476. *Les parois avants de ces bennes étant mobiles vers l'arrière*.

En soulevant l'avant de la benne, l'angle formé par le fond de la benne et le sol ainsi que l'augmentation de la section suffisent souvent à faire glisser le béton mais ce n'est pas toujours le cas.

Il est connu de prévoir dans le fond de la benne FR 2929604 , un volet actionné par un levier qui permet de soulever l'avant du bloc de béton pour le décoller. On comprend bien que les efforts sont importants et nuisent à la longévité du mécanisme.

L'invention se propose d'apporter une solution robuste.

A cet effet l'invention se rapporte à une benne à rebut de béton selon la revendication 1.

L'invention sera bien comprise à l'aide de la description ci après faite à titre d'exemple non limitatif en regard du dessin qui représente :

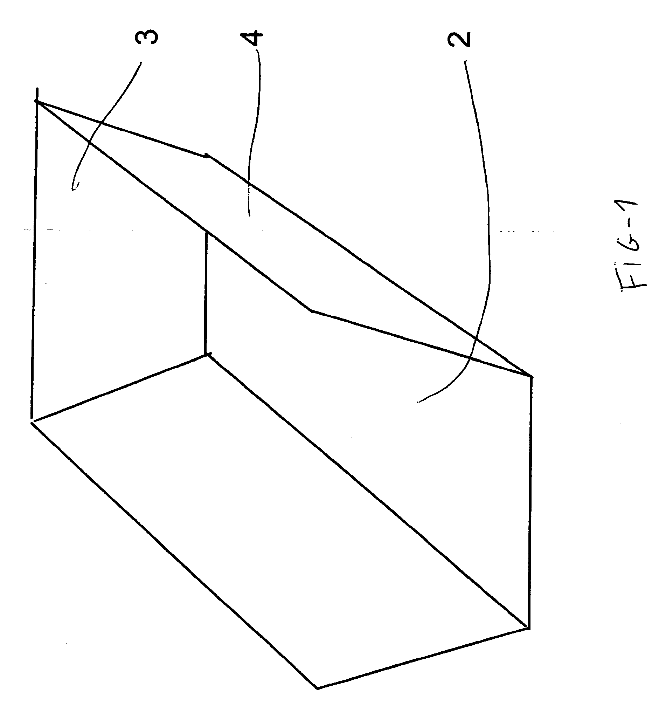

FIG 1 : une vue en perspective de l'avant d'une benne non encore équipé de l'outil de décollement

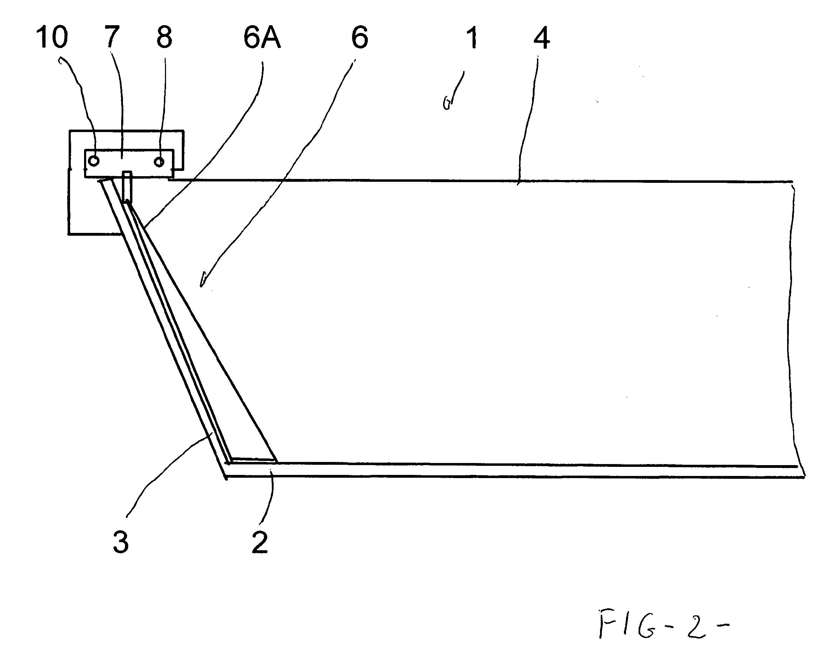

FIG 2 : coupe longitudinale d'une benne pourvue d'un outil

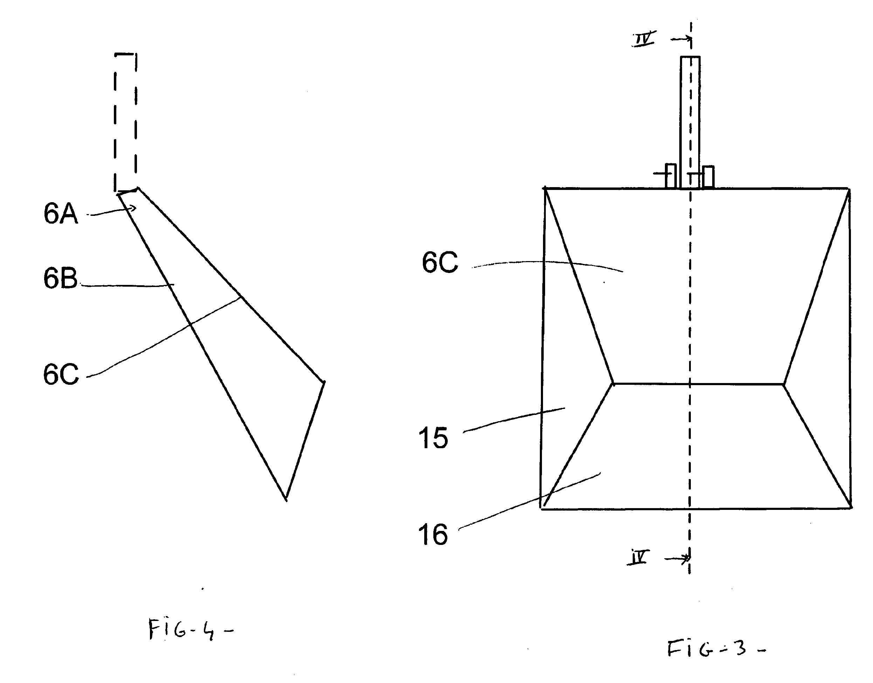

FIG 3 : vue de face d'une variante de l'outil
FIG 4 : coupe selon IV -IV de la figure 3
FIG 5 : vue d'un exemple de mécanisme d'actionnement,
FIG 6 : variante de la figure 5.

En se reportant au dessin, on voit une benne utilisée pour stocker provisoirement du béton. Cette benne 1 à rebut de béton comprend un fond 2, une paroi 3 avant, deux parois latérales 4 et un ouvrant à l'arrière (non représenté), les parois latérales s'écartant vers le haut pour définir une section en trapèze , la petite base correspondant au fond de la benne et un outil 6 de décollement situé à l'avant de la benne.

La benne est constituée d'un châssis formé de membrures sur lesquelles sont fixées des tôles délimitant le volume.

De préférence, la section trapézoïdale de la benne croit selon l'avant vers l'arrière.

L'outil 6 est un coin glissant sur la face interne de la paroi avant pour provoquer le déplacement vers l'arrière du bloc de béton.

Un moyen de manoeuvre est prévu pour déplacer le coin.

Avantageusement, la pointe 6A du coin est dirigée vers le haut, le dit coin étant mobile entre une position basse qu'il occupe lors du chargement du béton vers une position haute.

Ainsi en déplaçant le coin de sa position basse à la position haute, on va pousser sur la face avant du bloc de béton en s'appuyant sur la face interne de la paroi avant.

Dans une autre variante, la pointe du coin est orientée vers le bas.

Le coin comporte donc une face d'appui 6B venant au contact de la paroi avant et une face 6C dite poussée en contact avec le béton.

Le coin est simplement en appui sur la paroi avant.

Un vérin ou plus peuvent servir à actionner le coin.

Pour le déplacement du coin celui-ci sera, par exemple, suspendu à un levier 7 articulé sur un axe 8, le point 9 d'accroche du coin étant décalé par rapport a l'axe d'articulation.

Avantageusement, le levier 7 de manoeuvre du coin est équipé d'un moyen 10 pour y accrocher le bras de levage du camion qui sert à lever la benne.

Le levier sert donc à la fois à décoller le bloc de béton et également à lever la benne.

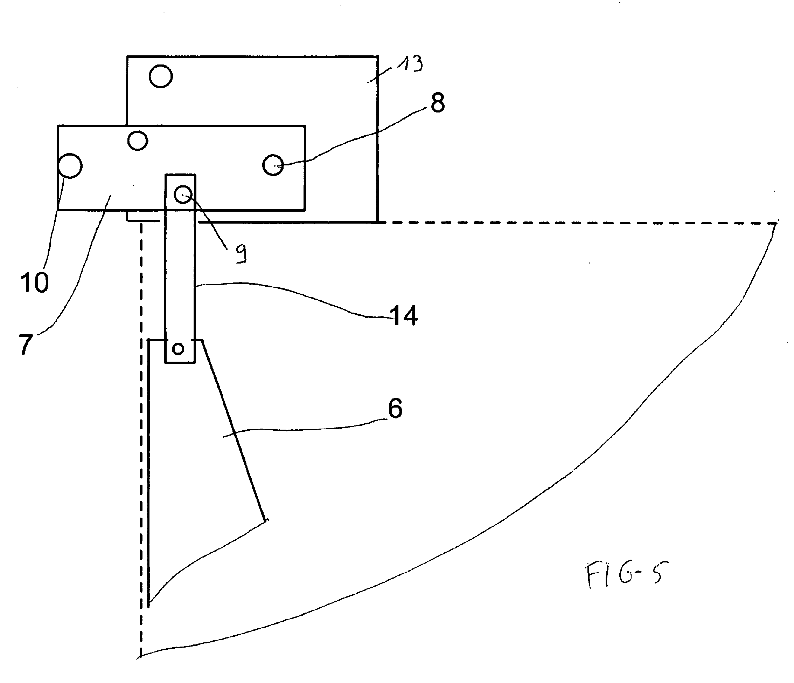

Dans une forme de réalisation (figure 5), l'amplitude de rotation du levier est limitée par exemple au moyen d'une butée 11.Ainsi lorsque l'on saisit le levier et que l'on soulève son extrémité, on commence par déplacer le coin 6 puis lorsque le levier atteint la ou les butées, on commence à soulever la benne.

Dans une autre forme de réalisation, un moyen 12 de verrouillage permet d'immobiliser en rotation le levier en position basse.

Le levier 7 est , par exemple, monté entre deux flasques 13 fixées au châssis de la benne.

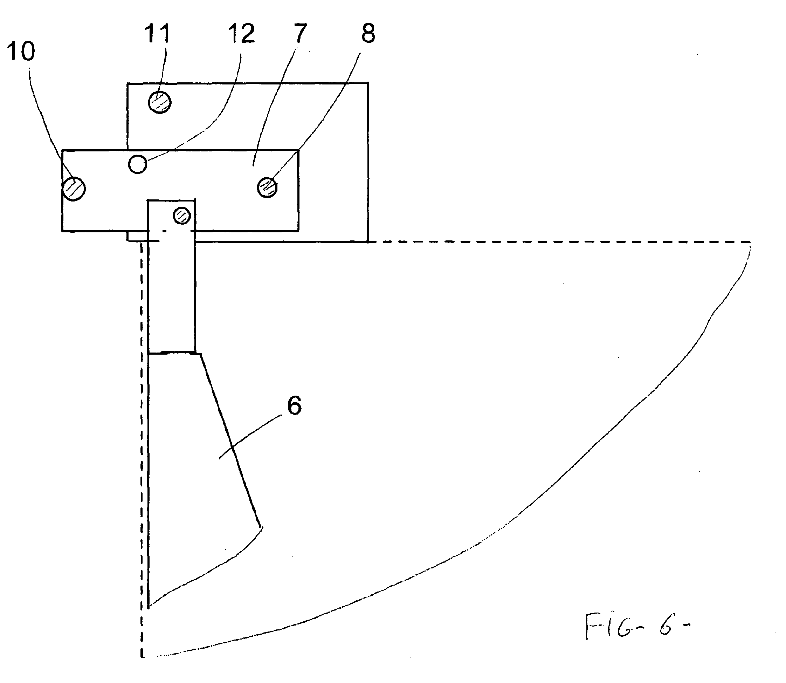

Le coin est suspendu au levier soit directement (figure 6) soit par une biellette 14.

Le coin s'étend en largeur soit sur toute la largeur de la paroi avant soit sur une fraction de la largeur de la paroi avant, la largeur du coin étant suffisante pour s'appuyer sur les membrures du châssis portant la tôle définissant le volume.

Lorsque la largeur du coin ne couvre pas la largeur de la paroi avant, il est prévu des faces latérales 15 en dépouille et une face 16 dite basse également en dépouille pour faciliter le démoulage.

Le montage suspendu du coin permet à celui-ci de s'écarter de la paroi lorsque la benne est levée et donc de permettre l'évacuation du béton éventuellement glissé sous le coin.

On rappellera que le déplacement du coin pour décoller le bloc de béton peut être réduit.

Il suffit de pousser sur le bloc de 5 millimètres pour le décoller.

Le coin sera soit en matériau plein soit en tôle logeant des raidisseurs.

On peut prévoir sur ce coin une couche de matériau diminuant la friction.

La figure 6 diffère de la figure 5 en ce que la suspente est solidarisée au coin non pas par un axe mais par une fixation rigide.

## Revendications

1. Benne à rebut de béton comprenant un fond (2), une paroi avant (3), deux parois latérales (4) et un ouvrant à l'arrière, les parois latérales s'écartant vers le haut pour définir une section en trapèze, la petite base correspondant au fond de la benne et un outil (6) de décollement situé à l'avant de la benne, cette benne étant **caractérisée en ce que** l'outil est un coin glissant (6)sur la face interne de la paroi avant pour provoquer le déplacement vers l'arrière du bloc de rebut de béton.

2. Benne à rebuts de béton selon la revendication 1 **caractérisé en ce que** le coin est orienté pour que la pointe (6A) soit dirigée vers le haut.

3. Benne à rebuts de béton selon la revendication 2 **caractérisé en ce que** la face (6C) du coin tournée vers l'arrière de la benne présente des faces ( 15, 16) en dépouille.

4. Benne à rebuts de béton selon l'une quelconque des revendications 1 à 3 **caractérisée en ce que** le coin est, suspendu à un levier (7) articulé sur un axe (8), le point (9) d'accroche du coin étant décalé par rapport a l'axe d'articulation.

5. Benne à rebuts de béton selon la revendication 4 **caractérisé en ce que** l'amplitude de rotation du levier est limitée par au moyen d'une butée (11).

6. Benne à rebuts de béton selon l'une quelconque des revendications 4 ou 5 **caractérisée en ce qu'**un moyen (12) de verrouillage permet d'immobiliser en rotation le levier en position basse.

7. Benne à rebuts selon l'une quelconque des revendications 4 à 6 **caractérisée en ce que** le levier est équipé d'un moyen (10) pour y accrocher le bras de levage du camion qui sert à lever la benne.

8. Benne à rebuts selon l'une quelconque des revendications 4 à 7 **caractérisée en ce que** le coin est suspendu au levier par une biellette.

## Claims

1. Waste concrete skip comprising a base (2), a front wall (3), two side walls (4) and an opening flap at the rear, the side walls diverging upwards to define a trapezium-shaped section, the small base corresponding to the base of the skip, and a dislodging tool (6) disposed at the front of the skip, this skip being **characterised in that** the tool is a sliding wedge (6) on the internal face of the front wall designed to cause the block of waste concrete to be displaced towards the rear.

2. Waste concrete skip as claimed in claim 1, **characterised in that** the wedge is oriented so that the apex (6A) is directed upwards.

3. Waste concrete skip as claimed in claim 2, **characterised in that** the face (6C) of the wedge directed towards the rear of the skip has tapering faces (15, 16).

4. Waste concrete skip as claimed in any one of claims 1 to 3, **characterised in that** the wedge is suspended from a lever (7) articulated on a shaft (8), the hooking point (9) of the wedge being offset from the axis of articulation.

5. Waste concrete skip as claimed in claim 4, **characterised in that** the amplitude of rotation of the lever is restricted by means of a stop (11).

6. Waste concrete skip as claimed in any one of claims 4 or 5, **characterised in that** a locking means (12) enables rotation of the lever to be blocked when in the bottom position.

7. Waste skip as claimed in any one of claims 4 to 6, **characterised in that** the lever is equipped with a means (10) for hooking onto it the lifting arm of the lorry used to lift the skip.

8. Waste skip as claimed in any one of claims 4 to 7, **characterised in that** the wedge is suspended on the lever by means of a link.

## Patentansprüche

1. Betonabfallmulde mit einem Boden (2), einer Vorderwand (3), zwei Seitenwänden (4) und einer Klappe an der Rückseite, wobei sich die Seitenwände nach oben verbreitern, um einen trapezförmigen Querschnitt zu bilden, wobei die kleine Grundfläche dem Boden der Mulde entspricht, und einem vorne an der Mulde befindliches Ablösewerkzeug (6), wobei die Mulde **dadurch gekennzeichnet ist, dass** das Werkzeug ein Keil (6) ist, der auf der Innenseite der Vorderwand gleitet, um ein Verschieben des Betonabfallblocks nach hinten zu bewirken.

2. Betonabfallmulde nach Anspruch 1, **dadurch gekennzeichnet, dass** der Keil solchermaßen ausgerichtet ist, dass die Spitze (6A) nach oben weist.

3. Betonabfallmulde nach Anspruch 2, **dadurch gekennzeichnet, dass** die zur Rückseite der Mulde weisende Seite (6C) des Keils Freiwinkelflächen (15, 16) aufweist.

4. Betonabfallmulde nach einem der Ansprüche 1 bis 3, **dadurch gekennzeichnet, dass** der Keil an einem Hebel (7) aufgehängt ist, der an einer Achse (8) gelenkig gelagert ist, wobei der Aufhängepunkt (9) des Keils bezüglich der Drehachse versetzt ist.

5. Betonabfallmulde nach Anspruch 4, **dadurch gekennzeichnet, dass** die Drehamplitude des Hebels durch einen Anschlag (11) begrenzt ist.

6. Betonabfallmulde nach einem der Ansprüche 4 oder 5, **dadurch gekennzeichnet, dass** ein Verriegelungsmittel (12) den Hebel in der unteren Position verdrehfest festzustellen erlaubt.

7. Betonabfallmulde nach einem der Ansprüche 4 bis 6, **dadurch gekennzeichnet, dass** der Hebel mit einem Mittel (10) versehen ist, um daran den Hubarm des Lastkraftwagens anzuhängen, der zum Anheben der Mulde dient.

8. Betonabfallmulde nach einem der Ansprüche 4 bis 7, **dadurch gekennzeichnet, dass** der Keil an dem Hebel durch einen Schwingarm aufgehängt ist.
